# EUROPEAN PATENT APPLICATION

(11) **EP 0 896 471 A1**
(43) Date of publication of application: **10.02.1999**
(21) Application number: 97202384.0
(22) Date of filing: 04.08.1997
(51) Int. Cl.: H04N 7/14

(54) **Image input device with network interface connection**

(71) Applicant: Microtek International, Inc., Taiwan 300 (TW)
(72) Inventor: Pan, Kelven, c/o 6 Industry East Road 3, Hsinchu 300 (TW)
(74) Representative: Ferguson, Alexander

(57) **Abstract**

An image input device with Network interface connection, including an image signal receiving unit to receive optical signals from an object; an image signal process unit to convert said optical signals into image signals; a central process unit to process and convert said image signals into those in a fixed format and to generate control signals to output said image signals; a network communication protocol setup device connected to said central process unit to provide said central process to setup the network communication protocol; an IP selector connected to said central process unit to provide an IP address to said central process unit for locating said image input device; and, a network controller controlled by said network communication protocol setup device and connected to network to output said image signals.

## Description

### BACKGROUND OF THE INVENTION

### Field of the Invention

The present invention relates to a digital image input device, more particularly, to a digital image input device with internet interface connection.

### Description of the Prior Art

Personal Computer(PC) has been comprehensively used to provide high speed computing and mass data accessing. Generally, a PC comprises input devices(e.g. keyboard, mouse), operation devices (e.g. central process unit, memory), data access devices (e.g. hard disk unit) and output devices (e.g. monitor, printer). To highlight "personal operation" capability, a PC user favors one-by-one allocation to compromise a PC system with peripheral devices. However, with the rapid development in the information industry , to achieve the operation at even higher speed and more data access, PC users are constantly challenged by upgrading their computers and facilities.

However, the emergence of internet is gradually altering the definition of a PC. Network Computer Architecture (NCA), a concept defined by Oracle Co., involves sharing of server resources and facilities among computers at the Client end through internet connection using Web technology; and, the Net PC concept disclosed by Microsoft considers that Net PC, as a branch of (but not a total substitute of) the computer family, seeks the total internet for the work platform of operating system and applications, so that both of the computer at the Client and Server share the same user's interface. Even though the definition to PC (or Net PC) given by the mainstream computer companies may be different, it can be safety predicted that "internet as the user's interface" shall be a vital milestone in the development of PC. Furthermore, Navigator browser introduced by Netscape in 1995 for World Wide Web unveils the epoch of Web-enabling Computing and leads the computer development with Web technology and makes it possible to transmit of mass multi-media data(text, audio, image and animation)on the internet via powerful Navigator programs.

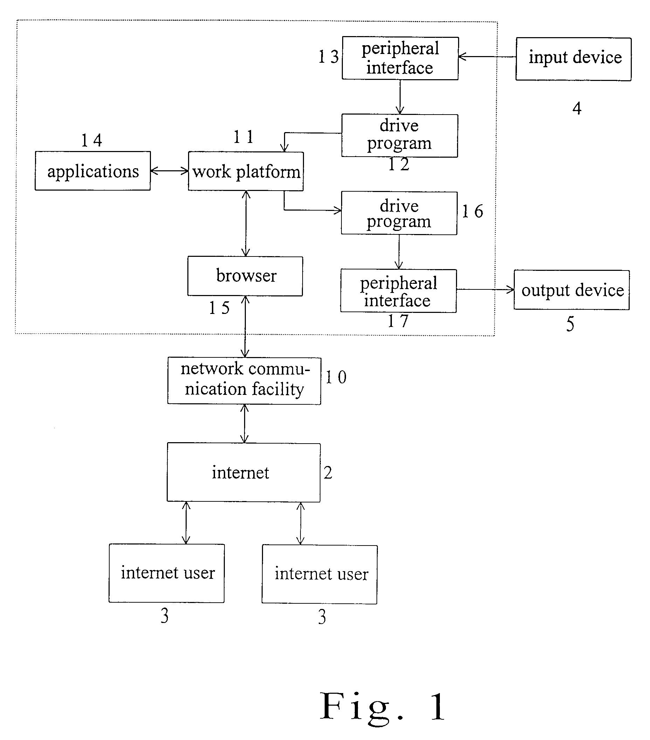

Fig. 1 shows the relation among the current input device, output device, computer system and internet. Within, Block [1] represents the prior art of computer system, which comprising a application program[14], a work platform[11], a browser [15], drivers [12] and [16], and interface [13] and [17]. Said computer system [1] becomes one of the internet users[3] by connecting with internet[2] through a net communication facility[10](essentially a modem or a net card). In the operating environment offered in Fig. 1,to retrieve digital data, such as the image data or audio data, the user has to input said data via an input device[4]into said computer system[1] to process. Usually, said input device[4] should be connected to a peripheral interface [13] (e.g. an interface card) and a driver [12] should be required to achieve such process. Then said data is further processed at the work platform[11] using the application program [14] into digital data for network transmission to the internet via software program from a browser[15] and said network communication facility[10].

In the input of image data, said input device[4] may be a digital camera, video camera or image scanner. Image data so retrieved or scanned is transmitted through an image drive interface (e.g. TWAIN) to said work platform[11]. The work platform[11] processes the image data with image applications into transmission data in the format (e.g. GIF or JPG) complying with network image transmission requirements. Finally, said data are further processed by said work platform[11] through said browser[15] and said network communication facility[10] into those to be transmitted on the internet.

The route starting from the work platform, a drive program[16] and said a peripheral interface[17] up to an output device[5] is required when the data transmitted on an internet[2] passes said network communication facility[10] and said browser[15] to be downloaded to said computer system[1]. Taking the image data output for an example, such output device may be either a screen or a printer; in case of audio data, such output device may be a speaker.

### Specific problems of the prior art are:

1. Complicate procedures required in the installation of computer system and the operation of input or output device: since installation of both hardware (interface card) and software (drive program) are required simultaneously to the general input or output device, it is not convenient for a PC user to install said input or output device.
2. The transmission of input or output data on the internet can only achieved by means of the common operation of work platform, applications, browser and network communication facility to a computer system, that means a major deduction of the use efficacy of an input or output device.
3. All input or output devices are required to be connected to a computer system. Therefore, to input or output data, an internet user has to make available the corresponding input or output device, resulting in a major increase of cost for buying the peripherals. The user will soon face again the issues of upgrading facilities and their installation and operation once a newer device has been introduced due to the advanced computer technology.

### SUMMARY OF THE INVENTION

The present invention, an input (or output) device provided with an interface to connect to internet, has been developed based on those concepts described above in conjunction with the vision of web connection technology driven Web Enabling Computing. The present invention offers an internet user to operate his input (or output) device as a web so that a plurality of internet users may share that same input (or output) device in the internet environment.

Accordingly, the primary purpose of the present invention is to provide an input (or output) device which can built in internet interface, whereby said device may be directly connected to a network system. The internet user then is able to carry on data transmission and process by initiating said device connected to the network through the browser on his computer system. For this purpose, the present invention essentially comprises an image signal generation unit to generate an image signal; a central process unit, to operate and process said image signal into an image in the format that allows transmission and to generate a control signal to transmit such image data to the network; a network communication protocol setup device, to set up said image input device for said central process unit to complete the connection to internet; an IP selector, to provide said image input device with a specific IP address according to said communication protocol; and a network controller, to be used to incorporate said image input device internet.

Within, said image input device may be in the form of a digital camera, a video camera, an image scanner or an image retriever.

It is another purpose of the present invention to provide an LAN Add-on Box provided with an internet connection interface. Said LAN Add-on Box may be connected to an input or output device of a prior art, whereby said device is able to directly connected to internet by skipping a computer system to offer a web that can be directly initiated by an internet user, thus to achieve the purpose of data input or output.

### BRIEF DESCRIPTION OF THE DRAWINGS

Fig. 1 shows a block chart illustrating the connection among input device, output device, computer system of the prior art and internet;
Fig. 2 shows a block chart illustrating the connection between an input device(or output) device of the present invention and an internet user;
Fig. 3 shows a block chart illustrating the function of an image input device of the present invention;
Fig. 4 shows a block chart illustrating the function of another embodiment of an image input device taken from Fig. 3;
Fig. 5 shows a block chart illustrating the connection to internet achieved by the incorporation of an image input device of the present invention and a regional network system; and
Fig. 6 shows a block chart illustrating an LAN Add-on Box provided with internet connection interface, which is another embodiment of the present invention.

### DESCRIPTION OF THE PREFERRED EMBODIMENTS

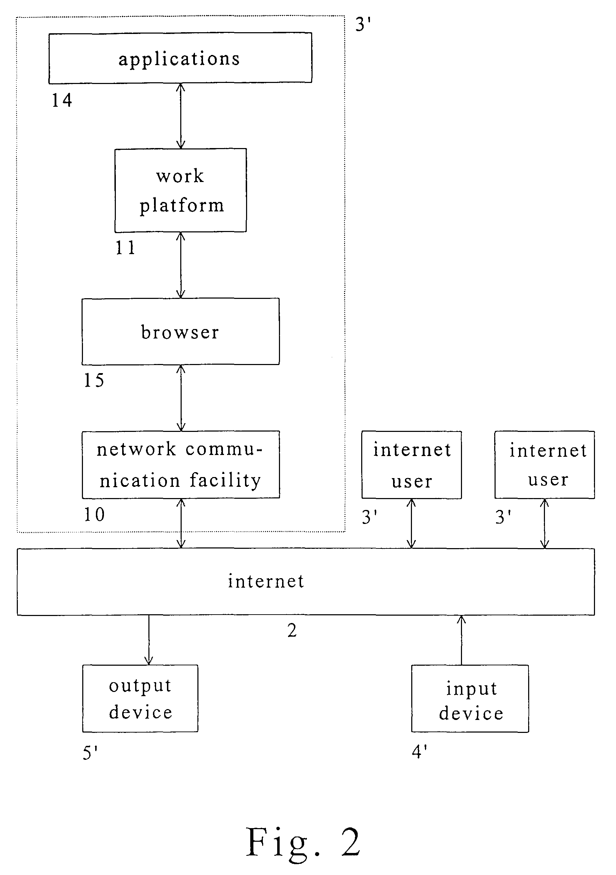

Reference is made to Fig. 2, within, a computer system, as indicated by a dotted line block, of an internet user [3'] comprises a work platform[11], a browser[15], an application[14] and a network communication facility[10]. Said computer system of the present invention differs from that computer system[1] of the prior art as illustrated in Fig. 1 in that said computer system of the Internet user[3'] of the present invention is similar to the configuration of a "network computer" addressed in said NCA protocol or NetPC definition; and said internet user[3'] under said configuration system achieves his input or output through an input device[4'] and output device[5'] connected to internet with the absence of an input device[4], output device[5], their peripheral interface and drive program as shown in Fig. 1. Said internet user[3'] enters an internet[2] environment by means of a browser[15] and an network communication facility[10]; within, a uniform resource locator(URL) must be first defined by said browser[15] for said input device[4'] or output device[5'] so that said user may rely on said browser[15] to directly initiate said input device[4'] or output device[5'] on said internet[2]. Once said device is initiated, said internet user[3'] starts writing in or reading out data through said internet[2] and said data are immediately transmitted to said input device[4'] or output device[5'].

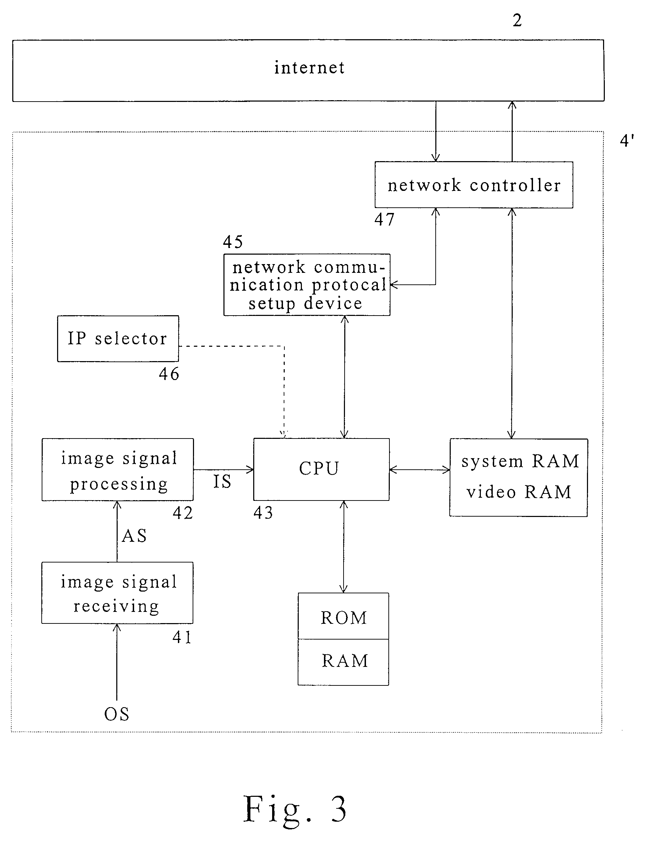

Referring to Fig. 3, an image input device is used as an example to describe the functional block of connection between said input device[4'] and said internet[2]. When said image input device[4'] retrieves or scans an image of an object, an image signal receiving unit[41] receives optical signal (OS) generated from said object, then converts said OS into an analog voltage signal (AS) to be sent to an image signal process unit[42].

Said signal process unit[42] in turn converts said analog voltage signal (AS) into digital voltage signal and process said digital voltage signal to generate image signal (IS) to be sent to a central process unit[43]. Said central process unit[43] generates a transferable image signal through the operation and process of ROM and SRAM, then registers said image signal in a system RAM or Video RAM to be readily transmitting to said computer system[1] or said internet[2]. Said transferable image signal may be in a format of GIF or JPG. Said image signal receiving unit[41] may be in the form of a linear CCD, an Area CCD or a CIS; and said image input device[4'] may by in the form of a digital camera, an image scanner or an image retriever.

Furthermore, Fig. 3 shows the flow of the control signal to said image input device[4'] of the present invention which comprises said central process unit[43]; a network communication protocol setup device[45] connected to said central process unit[43] for it to acquire a setting of a internet communication protocol; an IP selector[46] which is connected to and provides an IP address for said central process unit[43] to locate said image input device[4']; and a internet controller[47] which is controlled by said internet communication protocol setup device[45] for connecting to said internet[2] and outputting image signal. Within, said central process unit[43] directly checks for the entrance of signal from said image input device[4'] initiated by said internet user[3']. Said internet communication setup device[45] may contain TCP/IP Protocol, Ethernet driver, Network O.S., Ethernet Controller or other protocols, or that used in regional network (e.g. Novell system). Said IP selector[46] is sued to input a fixed IP address to said central process unit[43] where in turn provides a control signal to said internet communication setup device[45]. Therefore, a fixed IP address is given to said image input device[4'] which then becomes a net allowing to be directly initiated on said internet[2] through said browser[15] by said Internet user[3'] described in Fig. 2. When further connected by said network communication protocol setup device[45], said network controller[47] becomes an interface for connecting the present invention to said internet[2]. When said network communication protocol setup device[45] connects by means of said network controller[47] to said internet[2] and completes the setup of communication protocol, said central process unit[43] then transmit those image signals registered in said System RAM or Video RAM to the network for said Internet user[3] to retrieve those object image signals required.

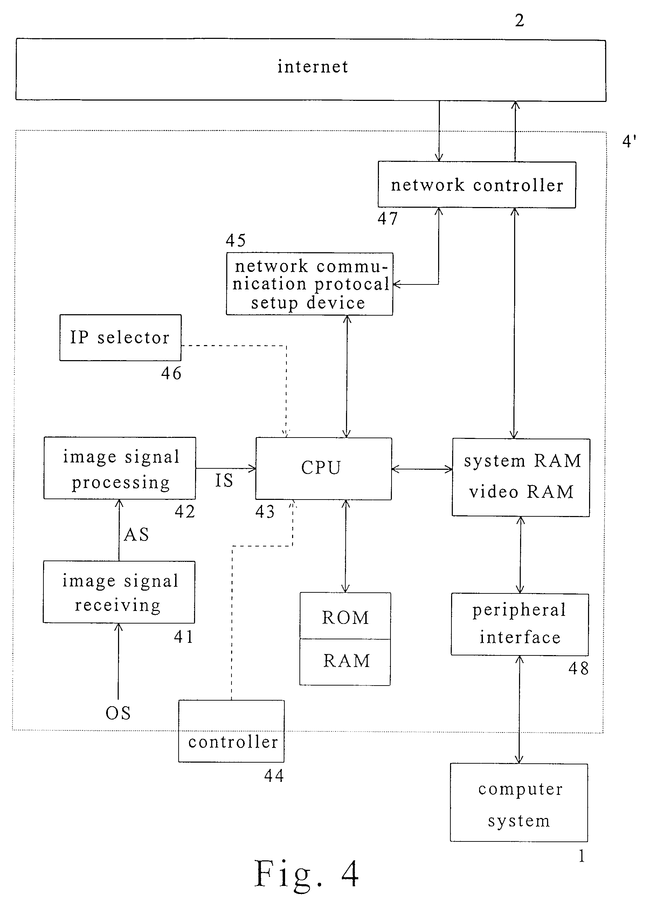

Fig. 4 shows another mode of the present invention taken from Fig. 3. In Fig. 4, a controller[44] is provided to provide control signal to said central process unit[43] to determine whether said image signals registered in said system Ram or Video RAM shall be transmitted to said computer system[1] through said peripheral interface[48] or to said internet[2] through said network controller[47]. If said signals shall be transmitted to said computer system[1] as determined by said control signal, the process required for those image signals are the same with those of the prior art. If said signals shall be transmitted to said internet[2] as determined by said control signal, said central process unit[43] acquires its network communication protocol through said network communication protocol setup device[45] in the process and control flow as illustrated in Fig. 3.

Figs. 2 and 3 describes the flow said internet user[3'] initiates said image input device of the present invention. When said input device[4'] is power on, said central process unit[43] sets up its IP address and connects to said internet[2] through said network communication protocol setup device[45] while said internet user[3'] also connects to said internet[2] through said network communication facility[10]. Said internet user[3'] has to initiate said browser[15] and connects to said input device[4'] by the program of said browser[15], in the meantime, said browser may initiate a Home Page built in said image input device[4'] in the same procedure as were if a net on said internet[2] has been initiated by said browser[15]. Consequently, said internet user[3'] is able to set up input device parameters on said Home Page and to access to image data as if such access is achieved by downloading the file from said internet [2].

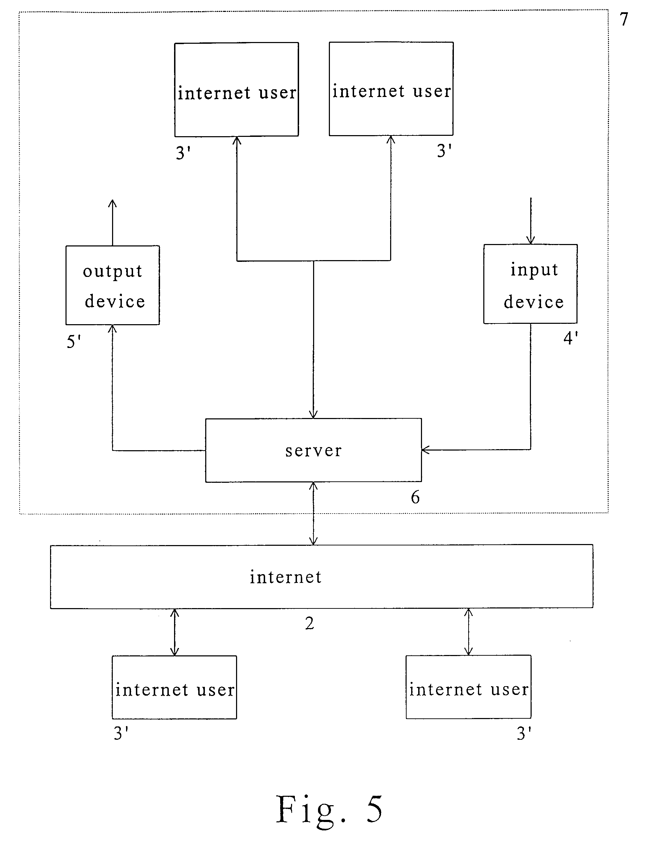

Fig. 5 shows another mode of the present invention connecting to said internet[2]. Within, said input device[4'], said output device[5'] and said Internet user[3'] form themselves into a regional network[7] through the connection by a server[6]. Said regional network[7] may further connect to said internet[2] of wide net. Under such configuration, said internet user[3'] from different network is able to initiate said image input device[4'] of the present invention or said output device[5'] by the connection between said internet[2] and said regional network[7].

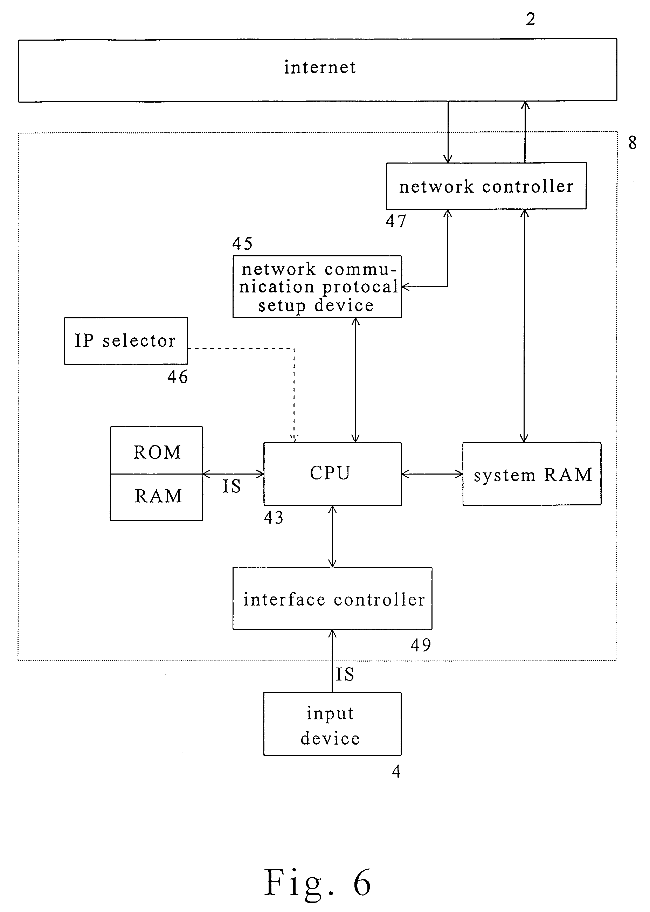

Fig. 6 shows another embodiment of the present invention. It relates to a LAN Add-on Box[8] provided with an interface to connect to internet. Said LAN Add-on Box can be directly connected to an input device(or an output device) of the prior art; said device then is able to directly connected to internet by skipping a computer system and is itself defined as a net which can be directly initiated by an internet user. Said LAN Add-on Box[8] is electrically connected to an input device[4] or an output device[5]; within, said input device[4] or said output device[5] is a device connected to said computer system[1] in the general practice. Said input device[4] may be in the form of an image input device(such as a scanner, video camera or digital camera) or audio input device while said output device[5] may be in the form of a printer. Though in Fig. 5 it shows only said input device[4] is connected to said LAN Add-on Box [8] which is provided with an interface for connecting to internet, said LAN Add-on Box can be also connected to said output device[5].

As illustrated in Fig. 6, said LAN Add-on Box comprises an interface controller[49], said central process unit[43], said IP selector[46], said network communication setup device[45] and said network controller[47]. The image input device is used again to describe this embodiment of the present invention. Said input device[4] of the prior art can be directly connected to said interface controller and provide said input image signal IS. Under said control signal flow as described in Fig. 3, said interface controller[49] sends said image signal IS through said central process unit[43] to said System RAM for further transmission. Said central process unit[43] accesses to communication protocol for said input device to have a fixed IP address and become said Internet user[3'] through said network communication protocol setup device[45] and a fixed IP address inputted by said IP selector[46] in the procedure of network connection as disclosed in Fig. 3. Therefore, said input device[4] becomes a net that can be directly initiated through said internet[2] by said browser[15]. Said network communication setup device[45] is further connected to said network controller[47] to provide an interface for connecting to said internet[2]. Once said network communication protocol setup device[45] connects via said network controller[46] to said internet[2] and completes the setup of communication protocol, said central process unit[43] then transmits those image signals registered in System RAM to said internet[2] for said Internet user[3'] having initiated said input device[4] to use for accessing to those object image signals required. Consequently, said LAN Add-on Box[8] of the present invention enables said input device[4] of the prior art to become a net which can be directly initiated by said browser[15], and an input device with internet configuration.

Said LAN Add-on Box[8] is not limited to be connected to an image input device(such as a scanner, a digital camera, or a video camera), it can also be connected to an input device or output device in other mode.

The present invention achieves easy installation and convenient use benefits by allowing an easy plug-in to the existing network system A user becomes a net on an internet to be initiated by said user simply by means of a controller and the adjustment of IP to select its IP address. In addition, the present invention makes it possible for multiple users sharing a same input or output device for cost saving in purchasing peripherals. The use efficiency of hardware is also enhanced since the present invention allows direct transmission on network.

## Claims

1. An image input device with network interface connection, comprising:
an image signal receiving unit to receive optical signals from an object;
an image signal process unit to convert said optical signals into image signals;
a central process unit to process and convert said image signals into those in a fixed format and to generate control signals to output said image signals;
a network communication protocol setup device connected to said central process unit to provide said central process to setup the network communication protocol;
an IP selector connected to said central process unit to provide an IP address to said central process unit for locating said image input device; and,
a network controller controlled by said network communication protocol setup device and connected to network to output said image signals.

2. An image input device with Network interface connection as claimed in Claim 1, within, said image input device can be connected to a server to form a regional network.

3. A LAN Add-on Box with Network interface connection, comprising:
an interface controller connected to an input device or output device of the prior art for providing input or output data;
a central process unit to process and convert said data and to generate a control signal to input or output said data;
a network communication protocol setup device connected to said central process unit to provide said central process to setup the network communication protocol;
an IP selector connected to said central process unit to provide an IP address to said central process unit for locating said image input device; and
a network controller controlled by said network communication protocol setup device for network connection to input or output said data.

4. A LAN Add-on Box provided with network connection interface as claimed in Claim 3, within, said interface controller is an SCSI interface and said input device may be in the form of a scanner.
